# EUROPEAN PATENT SPECIFICATION

(11) **EP 2 423 521 B1**
(45) Date of publication and mention of the grant of the patent: **13.09.2017**
(21) Application number: 10766962.4
(22) Date of filing: 08.04.2010
(51) Int. Cl.: F16C 19/46, F16C 9/02, F16C 33/34, F16C 33/46, F16C 33/66, F16C 33/78, F16C 33/80

(54) **NEEDLE BEARING AND NEEDLE BEARING DEVICE**
NADELKRANZ UND NADELKRANZVORRICHTUNG
ROULEMENT À AIGUILLES ET DISPOSITIF DE ROULEMENT À AIGUILLES

(30) Priority: 22.04.2009 JP 2009103768; 02.12.2009 JP 2009274417
(43) Date of publication of application: 29.02.2012
(73) Proprietor: NTN Corporation, Osaka-shi, Osaka 550-0003 (JP)
(72) Inventor: KATAYAMA Akihiko, Iwata-shi Shizuoka 438-0037 (JP); TERADA Takanori, Iwata-shi Shizuoka 438-0037 (JP); NISHIKAWA Makoto, Iwata-shi Shizuoka 438-0037 (JP)
(74) Representative: Grünecker Patent- und Rechtsanwälte PartG mbB
(86) International application number: PCT/JP2010/056355
(87) International publication number: WO 2010/122904

(56) References cited:
- DE-U1- 7 638 179
- JP-A- 55 010 140
- JP-A- 2002 339 980
- JP-A- 2003 307 225
- JP-A- 2008 101 714
- JP-A- 2008 157 268
- JP-U- H0 558 956

## Description

### TECHNICAL FIELD

The present invention relates to needle bearings for supporting automotive engine crankshafts, camshafts, etc.; to needle bearing devices which includes the needle bearings; and to improved lubrication thereof in particular.

### BACKGROUND ART

Conventionally, sliding bearings are commonly used for supporting automotive engine crankshafts. A lubrication arrangement therefor is to supply lubricant from inside the engine to a main gallery, where the lubricant is distributed to an outer diameter side of the crankshaft's sliding bearing. Via this sliding bearing, the lubricant is introduced into an oil hole inside the crankshaft, and then supplied to a bearing at a large end of a connecting rod (see Patent Literature 1).

Also, a lubrication arrangement for bearings which support a camshaft is to supply lubricant from an outer diameter side of one of the sliding bearings. The camshaft has a hollow which serves as a pathway for the lubricant to be supplied to the remaining sliding bearings (see Patent Literature 2).

A lubrication arrangement for bearings which support a balanceshaft is to supply lubricant from a pathway provided in a housing to an upstream-side sliding bearing of one of the balanceshaft, and then to a downstream-side sliding bearing of the other balanceshaft (see Patent Literature 3).

These sliding bearings used for supporting crankshafts or other shafts as described above are separable, being dividable into two halves on a plane which includes the bearing's centerline so that the bearing can be assembled without interfering with the crankshaft counterweights and other components, and the assembly can be performed from the outer diameter side.

Meanwhile, dual-dividable needle bearings are known for supporting crankshafts (see Patent Literature 4).

The needle bearing includes needle-like rollers, a retainer therefor, and an outer ring. The needle bearing makes use of line contact of the needle-like rollers with the outer ring, and for this construction, the bearing has a high load capacity and a high rigidity for its small projected area. These properties of the needle bearing lead to an idea of utilizing separable needle bearings in place of the conventional sliding bearings, for supporting the crankshafts and other components described above.

### Citation List

### Patent Literature

Patent Literature 1: JP-A H7-27126 Gazette
Patent Literature 2: JP-A 2000-213323 Gazette
Patent Literature 3: JP-A 2006-2852 Gazette
Patent Literature 4: US Patent No. 1921488; Specification and Drawings

### SUMMARY OF INVENTION

### Technical Problem

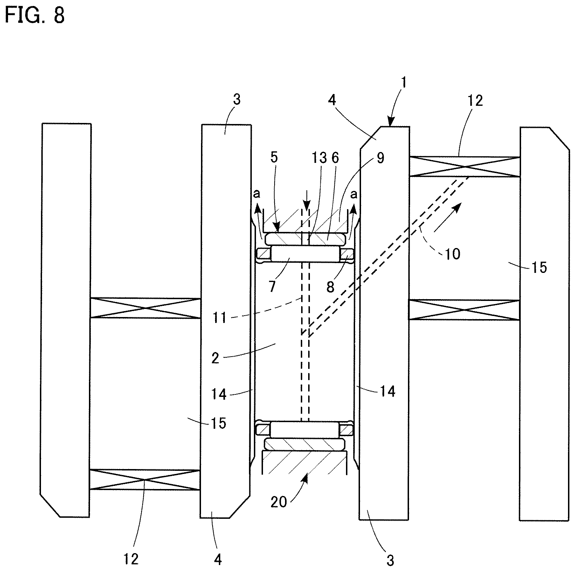

Based on Fig. 8, description will be made for a case of a crankshaft needle bearing device 20 which includes a separable needle bearing 5. Fig. 8 shows a crankshaft 1, a journal 2, counterweights 3, and crank arms 4. The separable needle bearing 5 is used as a journal bearing for supporting the journal 2. The needle bearing 5 includes an outer ring 6, needle-like rollers 7 and a retainer 8 which guides the needle-like rollers 7; and is assembled between the counterweight 3 and the crank arm 4 from an outer-diameter side, being fitted into and supported by a shaft supporting portion 9 of the housing. Each crank arm 4 has a surface facing away from the bearing and provided with a crank pin 15.

The bearing device 20 has a lubrication arrangement to supply lubricant from inside the engine to a main gallery, then to a shaft supporting portion 9 of the housing, and then diverted to an oil hole 13 which is provided in an outer ring 6 of the needle bearing 5. Further, lubricant inside the needle bearing 5 flows into a divergent pathway 10 which branches off at a middle point of a lubrication pathway 11 of the journal 2, to a downstream-side connecting rod bearing 12 at a large end of the connecting rod. It should be noted here that reference number 14 indicates an arm boss which provides a base of the crank arm 4.

In the above lubrication arrangement, lubricant provides lubrication first to the needle bearing 5 on the upstream, and then to the connecting rod bearing 12 on the downstream.

However, a close look at the needle bearing 5 will lead to an understanding that lubricant supplied to the inside of the bearing will leak out, as indicated by arrows "a", from gaps between the retainer 8 and the outer ring 6 as well as from gaps between the retainer 8 and the journal 2. This reduces the amount of lubricant which reaches the downstream connecting rod bearing 12, resulting in insufficient lubrication.

The separable needle bearing 5 is also usable as a journal bearing for camshafts and balanceshafts although there is no drawing provided herein. In this case again, there is lubricant leakage from the upstream bearing and therefore, there is a problem of insufficient lubrication in the downstream bearings as in the case described above.

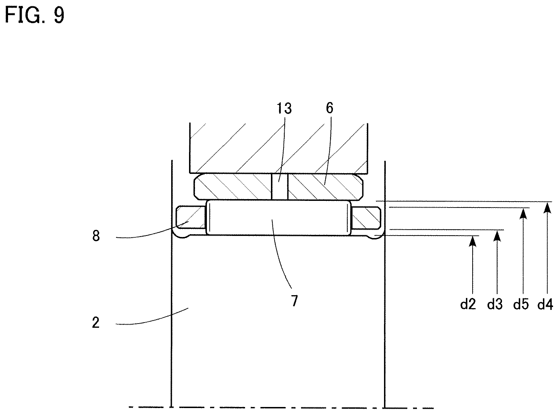

In the above-described bearing device which uses the separable needle bearing 5, the gaps which cause the lubricant leakage have the following dimensions for example (see Fig. 9) :

| | |
|---|---|
| Outer diameter d2 of the journal 2 | 44 mm |
| Inner diameter d3 of the retainer 8 | 46 mm |
| Outer diameter d5 of the retainer 8 | 50 mm |
| Inner diameter d4 of the outer ring 6 | 51 mm |

It should be noted here that as the crankshaft 1 has crank arms 4 which extend radially from both ends of the journal 2, a camshaft has cams which extend in the same manner; likewise, a balanceshaft has balanceweights which extend in the same manner. In the present invention, these parts which extend radially from both ends of the journal 2, such as the crank arms 4, the cams and the balanceweights, will be called arms, and a boss portion of the arm will be called arm boss 14.

Thus far, description was made for a case of using a separable needle bearing. However, the problem of lubricant leakage on the upstream side which causes insufficient lubrication of the bearing(s) on the downstream is also the problem in cases where ordinary non-separable needle bearings are used.
The document JP 2008-101714 A discloses a needle bearing comprising an outer ring, needle-like rollers and a retainer for guiding the needle-like rollers. The retainer has two side edges each faced by the outer ring at a space serving as an outer-ring-side narrow pathway for reduced lubricant leakage, whereas each of the retainer side edges is provided with a journal-side narrow-path formation section for formation of a journal-side narrow pathway to reduce lubricant leakage between itself and the journal when the bearing is assembled to the journal.
The document JP 2008-157268 A discloses a needle bearing according to the preamble of claim 1.

It is an object of the present invention to provide a needle bearing and a needle bearing device including the same, for use as a journal bearing, etc. on an upstream side of a lubricant pathway, with reduced lubricant leakage and improved lubrication to bearings used on a downstream side.

### Solution to Problem

This object is solved by the features of claims 1 and 9. Further improvements are laid down in the subclaims.
The present invention has an aspect, which provides a needle bearing including: an outer ring; needle-like rollers; and a retainer for guiding the needle-like rollers. The retainer has two side edges each faced by the outer ring at a space serving as an outer-ring-side narrow pathway for reduced lubricant leakage whereas each of the retainer side edges is provided with a journal-side narrow-path formation section for formation of a journal-side narrow pathway to reduce lubricant leakage between itself and a journal when the bearing is assembled to the journal.

When the above-described needle bearing is used as a journal bearing for example, lubricant leakage from the lubricant leakage gaps between the outer ring and each of the retainer' s side edges is reduced by the outer-ring-side narrow pathways which occur within the bearing. At the other set of leakage gaps between the retainer and the journal, the journal-side narrow-path formation sections provided between the journal's outer diameter surface and the retainer's two side edges form journal-side narrow pathways, to reduce lubricant leakage at these narrowed portions.

According to the invention the outer-ring-side narrow pathways are between flange portions which are extended from two outer diameter surfaces in the retainer's side edges to a height to face their corresponding end surfaces of the outer ring and respective end surfaces of the outer ring; or that the outer-ring-side narrow pathways are between an inner diameter surface of the outer ring and two outer diameter surfaces of the retainer's side edges.

Other arrangement may be that the journal-side narrow-path formation sections are formed by projections extended on the inner diameter surfaces of the retainer's two side edges toward the journal; or that the journal-side narrow-path formation sections are formed by inner diameter surfaces of the retainer's side edges opposing radially to the journal's outer diameter surface.

Still another arrangement is that the outer ring is formed with an oil hole on an axially outer side of a rolling contact surface in the outer ring but on an axially inner side of the outer-ring-side narrow pathways whereas the journal has a lubrication pathway formed with an oil hole on an axially outer side of the rolling contact surface in the journal but axially inner side of the journal-side narrow-path formation sections.

### Advantageous Effects of Invention

As described, a needle bearing and a needle bearing device according to the present invention has an outer-ring-side narrow pathway on each side of the retainer, between the outer ring and a side edge of the retainer; and a journal-side narrow-path formation section on each side edge of the retainer. Therefore, when the bearing is used as a journal bearing for example, internal lubricant leakage is reduced by the outer-ring-side narrow pathways between the retainer and the outer ring as well as by journal-side narrow pathways between the retainer and the journal.

Also, by setting the size of each narrow pathways to a value greater than zero but smaller than 0. 2 mm, the present invention makes it possible to reduce the lubricant leakage effectively while reducing rotation torque increase in the bearing.

Further, the present embodiment provides the arrangement that the outer ring is formed with an oil hole on an axially outer side of a rolling contact surface in the outer ring but on an axially inner side of the outer-ring-side narrow pathways whereas the journal has a lubrication pathway formed with an oil hole on an axially outer side of the rolling contact surface in the journal but axially inner side of the journal-side narrow-path formation sections. This reduces a problematic increase in surface pressure near the oil holes under load. Also, this prevents the rollers from blocking the oil hole, ensuring sufficient supply of lubricant to the bearing on the downstream side.

As another aspect, the needle bearings according to the above-given description may be used in bearing devices for supporting a crankshaft, for example, supported by a plurality of bearings disposed downstream and upstream along a lubrication pathway. Use of the bearings according to the present invention at relatively upstream positions will provide sufficient lubrication of all the bearings along the lubrication pathway without the problem of lubricant shortage in the downstream bearings.

### BRIEF DESCRIPTION OF DRAWINGS

Fig. 1 is a sectional view showing a state of use of a separable needle bearing according to a first embodiment.
Fig. 2 is an enlarged sectional view taken in lines X-X in Fig. 1.
Fig. 3 is a sectional view showing a state of use of a separable needle bearing according to a second embodiment.
Fig. 4 is a sectional view showing a state of use of a separable needle bearing according to a third embodiment being not part of the present invention.
Fig. 5 is a sectional view showing a state of use of a separable needle bearing according to a fourth embodiment.
Fig. 6 is a sectional view showing a state of use of a separable needle bearing according to a fifth embodiment being not part of the present invention.
Fig. 7 is a sectional view showing part of a bearing device according to a sixth embodiment.
Fig. 8 is a sectional view showing part of a conventional bearing device.
Fig. 9 is a partially enlarged sectional view from Fig. 8.

### DESCRIPTION OF EMBODIMENTS

Hereinafter, embodiments of the present invention will be described based on the attached drawings.

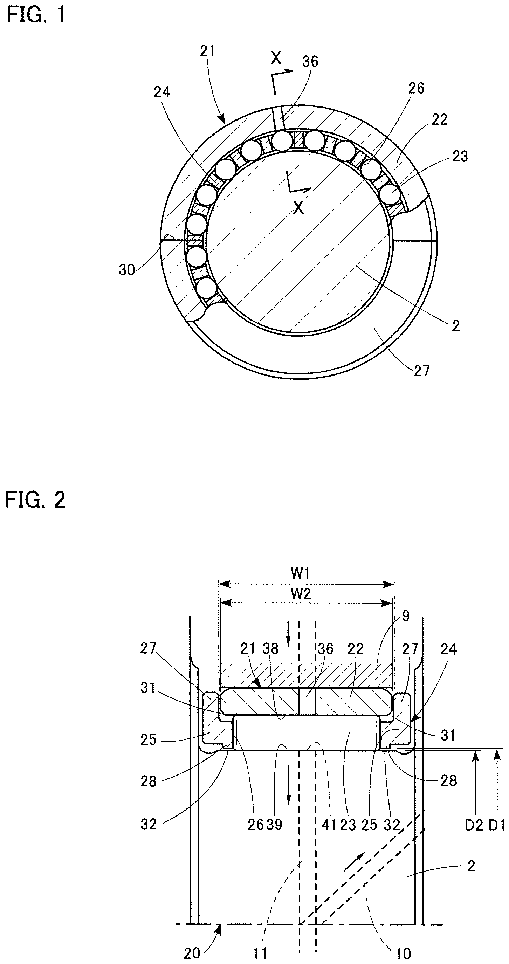

[First Embodiment] Fig. 1 and Fig. 2 show a separable needle bearing 21 according to a first embodiment, which includes an outer ring 22, needle-like rollers 23 and a retainer 24 which guides the needle-like rollers 23. The outer ring 22 is made of metal while the retainer 24 is made of synthetic resin, each being an annular assembly composed of a pair of semi-annular halves divided from each other in a radial division plane 30.

The outer ring 22 may be whichever of a solid type that is formed from a metal ingot by cutting, and a shell type that is formed of a steel plate. Also, the outer ring 22 is formed into a simple shape of cylinder, with neither of its both ends formed with an inward-oriented flange portion. The outer ring 22 has an intermediate portion in its width, where there is formed an oil hole 36 which is a through-hole penetrating in a radial direction.

The retainer 24 is cylindrical, formed with rectangular pockets 26 at an interval in its entire circumference. Each of the pockets 26 is fitted with one of the needle-like rollers 23 rotatably.

As shown in Fig. 2, the retainer 24 has side edges 25, 25 on its respective ends, where on their entire radially outer circumferential surfaces thereof, a pair of axially opposed flange portions are extended radially outward in a shape of a letter L. The flange portions 27 have their opposing inner surfaces extended to face closely to end surfaces of the outer ring 22. The extended height of the flange portions 27 is greater than a half of, yet within a thickness of, the outer ring 22 under a state that the bearing 21 is assembled to the journal 2.

The flange portions 27 and the corresponding opposed end surfaces of the outer ring 22 are spaced by gaps called outer-ring-side narrow pathways 31, 31, which are gaps significantly smaller than those found in conventional needle bearings.

The outer-ring-side narrow pathways 31 have a size W1-W2 which satisfies the following condition 0<W1-W2<0.2 mm, where W1 represents a distance between opposed inner surfaces of the flange portion 27, and W2 represents a width of the outer ring 22. The outer-ring-side narrow pathways 31 occur at two locations, i.e., at both ends of the outer ring 22. The size W1-W2 defined above is a sum of these two gaps, each being given a certain fraction of the sum within the defined range of dimension. By setting the size of the outer-ring-side narrow pathways 31 as described above, the present invention makes it possible to reduce the amount of lubricant which leaks out of the gaps between the outer ring 22 and the retainer 24 while reducing rotation torque increase in the needle bearing 21.

The side edges 25, 25 of the retainer 24 also have their respective inner diameter surfaces formed with projections 28, 28 extended closely to the journal 2 and making contact with the pockets 26 along their entire circumferences. The projections 28 represent portions called "journal-side narrow-path formation sections" in the claims.

When the separable needle bearing 21 is assembled to an outer diameter surface of a journal 2 to constitute a journal bearing device, an inner diameter surface of the projection 28 and an outer diameter surface of the journal 2 form journal-side narrow pathways 32, which are gaps significantly smaller than those found in conventional needle bearings.

The journal-side narrow pathways 32 have a size D1-D2 which satisfies the following condition 0<D1-D2<0.2mm, where D1 represents an inner diameter of the projection 28, and D2 represents an outer diameter of the journal 2. By setting the size of the journal-side narrow pathways 32 as described above, the present invention makes it possible to reduce the amount of lubricant which leaks out of the gap between the journal 2 and the retainer 24 while reducing rotation torque increase in the needle bearing 21.

It should be noted here that the outer ring 22 is formed with an oil hole 36 and the journal 2 is formed with an oil hole 41 in the lubrication pathway 11, respectively in a rolling contact surface 38 of the outer ring 22 and in a rolling contact surface 39 of the journal 2 for the rollers 23.

With the above arrangement, the bearing device 20 has a lubrication arrangement which is similar to the one described with reference to Fig. 8, i.e., to supply lubricant from inside the engine to a main gallery, then to a shaft supporting portion 9 of the housing, and then to distribute to an oil hole 36 which is provided in an outer ring 22 of the needle bearing 21. Further, lubricant inside the needle bearing 21 flows into a divergent pathway 10 which branches off at a middle point of a lubrication pathway 11 of the journal 2, to a downstream-side connecting rod bearing at a large end of the connecting rod.

### [Second Embodiment]

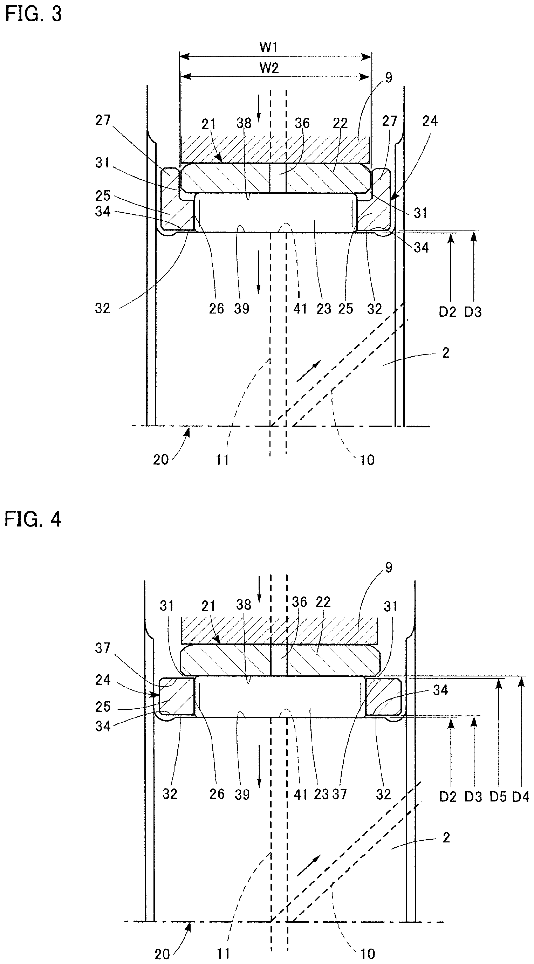

Fig. 3 shows a separable needle bearing 21 according to a second embodiment, which uses the same arrangement as used in the previous embodiment in that the retainer 24 has side edges 25, 25 on its respective ends, where on their respective outer-diameter surfaces, flange portions are extended radially outward in a shape of a letter L; that outer-ring-side narrow pathways 31, 31 are formed between the flange portions and the two ends of the outer ring 22; and that an oil hole 36 is provided at an intermediate portion of the width of the outer ring 22: The present embodiment differs, however, from the previous embodiment in the construction of the journal-side narrow pathways 32, 32.

Namely, in this case, the projections 28 described earlier are not provided but instead, the side edges 25 of the retainer 24 have a smaller inner diameter than in conventional needle bearings so as to provide small-inner-diameter surfaces 34 (inner diameter D3) which face closely to the journal 2. These small-inner-diameter surfaces 34 represent the "journal-side narrow-path formation sections" described in the claims. The small-inner-diameter surfaces 34 and the journal 2 form the journal-side narrow pathways 32, 32. The journal-side narrow pathways 32 have a size D3-D2 which satisfies the following condition 0<D3-D2<0.2 mm, where D2 represents an outer diameter of the journal 2 like in the previous embodiment.

### [Third Embodiment, not forming part of the invention]

Fig. 4 shows a third embodiment not forming part of the invention, which has journal-side narrow pathways 32, 32 like in the second embodiment (see Fig. 3), formed between small-inner-diameter surfaces 34 (journal-side narrow-path formation sections) and a journal 2, with a size satisfying the condition 0<D3-D2<0.2mm.

In this case, outer-ring-side narrow pathways 31, 31 are formed differently from the first and the second embodiments: Namely, the two side edges 25 of the retainer 24 have a greater diameter than those found in conventional needle bearings, and the narrow pathways are formed by large-outer-diameter surfaces 37 (outer diameter D5) which face closely to an inner-diameter surface of the outer ring 22, and an inner-diameter surface of the outer ring 22.

The outer-ring-side narrow pathways 31 have a size D4-D5 which satisfies the following condition 0<D4-D5<0.2 mm, where D4 represents an inner diameter of the inner-diameter surface of the outer ring 22. In this case again, the arrangement reduces lubricant leakage. In such a case as the above, where the outer-ring-side narrow pathways 31 are formed between the inner-diameter surface of the outer ring 22 and the large-outer-diameter surface of the retainer 24, the retainer 24 is made of metal, i.e., a plastic retainer is not used. Plastic retainers have a risk of thermal expansion, which will cause its outer diameter to become greater than the inner diameter of the outer ring 22 which is made of steel.

### [Fourth Embodiment]

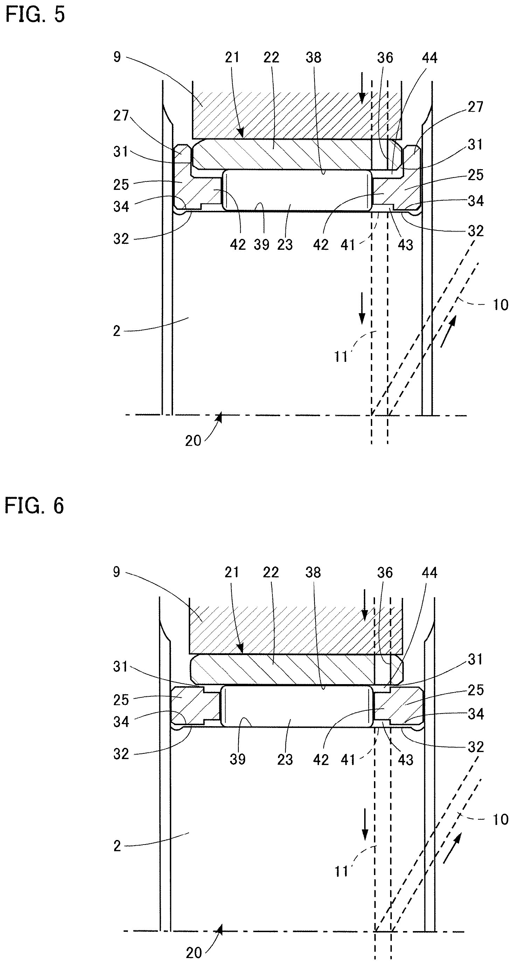

Fig. 5 shows a fourth embodiment, which is a variation of the second embodiment (see Fig. 2) or the third embodiment (see Fig. 3) described earlier. Specifically, in the second and the third embodiments, the oil hole 36 in the outer ring 22 and the oil hole 41 in the lubrication pathway 11 of the journal 2 are provided respectively in the rolling contact surface 38 of the outer ring 22 and in the rolling contact surface 39 of the journal 2 for the rollers 23. This poses a risk of increased surface pressure near the oil holes 36, 41 when the rollers 23 come under load, which eventually leads to an initiation of a bearing failure. Another problem is momentary closure of the oil holes 36, 41 by the rollers 23, which disturbs the flow of lubricant, reducing the amount of lubricant to the downstream-side bearing 12 (see Fig. 8) at the large-end of the connecting rod.

Thus, in order to solve the above-described problem, the fourth embodiment uses the arrangement of the third embodiment as a basis, while the oil hole 36 in the outer ring 22 is provided at a location which is on an axially outer side of the rolling contact surface 38 in the outer ring 22 but on an axially inner side of the outer-ring-side narrow pathways 31. Also, the oil hole 41 in the lubrication pathway 11 of the journal 2 is provided at a location which is on an axially outer side of the rolling contact surface 39 in the journal 2 but on an axially inner side of the journal-side narrow-path formation sections (small-inner-diameter surface) 34.

In the above-described arrangement, the oil holes 36, 41 are on the outer side of the rolling contact surfaces 38, 39, and therefore the rollers 23 do not block the oil holes 36, 41. Thus, the arrangement solves the problem of increased surface pressure near the oil holes 36, 41 and blockage of lubricant flow even when the rollers 23 are under load. Also, the arrangement reduces lubricant leakage since the oil holes 36, 41 are located inside the outer-ring-side narrow pathways 31 and the journal-side narrow pathways 32 under the state where the bearing is assembled to the journal 2.

Further, the arrangement includes projected portions 42 formed respectively on both of the side edges 25 of the retainer 24, extended inward to reach end surfaces of the rollers 23. Predetermined radial gaps 44 occur between the projected portion 42 and the outer ring 22. The oil hole 36 of the outer ring 22 is open to the area of gap 44 whereas the oil hole 41 in the lubrication pathway 11 of the journal 2 is faced to the gap 43 and open to the area thereof. Since the oil holes 36, 41 are open to these gaps 44, 43, lubricant can smoothly flow into and out of the bearing.

### [Fifth Embodiment not forming part of the invention]

Fig. 6 shows a fifth embodiment not forming part of the invention, which solves the same problems as described for the fourth embodiment, based on the arrangement used in the third embodiment (see Fig. 4). Specifically, as in the fourth embodiment, the oil hole 36 in the outer ring 22 and the oil hole 41 in the lubrication pathway 11 of the journal 2 are provided at locations which are on an axially outer side of the rolling contact surface 38 of the rollers 23 but on an inner side of the outer-ring-side narrow pathways 31 and the journal-side narrow pathways 32.

Also, the arrangement includes the projected portions 42 formed respectively on both of the side edges 25 of the retainer 24, extending inward to reach end surfaces of the rollers 23. Predetermined radial gaps 44 occur between the projected portions 42 and the outer ring 22. Also, predetermined radial gaps 43 occur between the projected portions 42 and the journal 2.

These gaps 44, 43 are on an axially outer side in the rolling contact surface 38 of the rollers 23 but on an inner side of the outer-ring-side narrow pathways 31 and the journal-side narrow pathways 32. The oil hole 36 of the outer ring 22 is open to the area of gap 44. The oil hole 41 in the lubrication pathway 11 of the journal 2 is faced to the oil hole 36 and is open to the area of gap 43. Since the oil holes 36, 41 are open to these gaps 44, 43, lubricant can flow into and out of the bearing even more smoothly.

### [Sixth Embodiment]

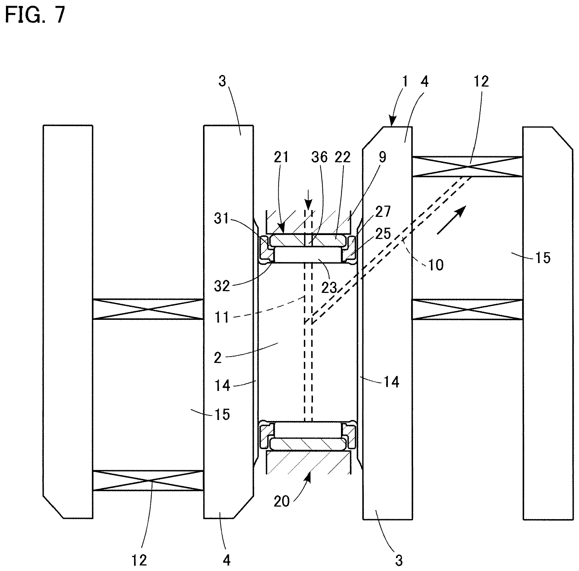

Next, Fig. 7 shows a sixth embodiment, and with reference to this drawing, description will be made for a needle bearing device 20 on a crankshaft 1. The description will use a case where the journal bearing in this embodiment is provided by a separable needle bearing 21 (see Fig. 1 and Fig. 2) in the first embodiment described earlier.

Fig. 7 uses the same reference numbers as the conventional example (see Fig. 8), i.e., number 1 indicates a crankshaft, 2 indicates a journal, 3 indicates counterweights and 4 indicates crank arms. A separable needle bearing 21 is assembled to a journal 2. The needle bearing 21 is fitted into and supported by a shaft supporting portion 9 of a housing between counterweights 3 and crank arms 4.

The above arrangement has the same lubrication arrangement as already described with reference to Fig. 8, i.e., to supply lubricant from inside the engine to a main gallery, then to a shaft supporting portion 9 of the housing, and then to distribute to an oil hole 36 which is provided in an outer ring 22 of the needle bearing 21. Further, lubricant inside the needle bearing 21 flows into a divergent pathway 10 which branches off at a middle point of a lubrication pathway 11 of the journal 2, to a connecting rod bearing 12 at a large end of the connecting rod.

In the above lubrication arrangement, lubricant provides lubrication first to the upstream needle bearing 21, and then to the connecting rod bearing 12 on the downstream. In this case, lubricant leakage is significantly less than in conventional cases in the upstream-side needle bearing 21, due to the outer-ring-side narrow pathways 31 and the journal-side narrow pathways 32 (see Fig. 2). This prevents shortage of lubricant on the downstream-side connecting rod bearing 12, and ensures sufficient lubrication.

It should be noted here that the needle bearing 21 may be provided by any of those according to the second to the fifth embodiments, in whichever of the cases, lubricant leakage is reduced by principally the same working, and sufficient lubrication of the bearing is ensured on the downstream side.

Likewise, camshafts and balanceshafts may use the needle bearings 21 provided by the first through the fifth embodiments as needle bearings disposed on the upstream side of the lubrication pathway, to ensure sufficient lubrication of the bearings on the downstream side. In this case, the needle bearings 21 are provided by separable type.

### Reference Signs List

- 1: Crankshaft
- 2: Journal
- 3: Counterweights
- 4: Crank arm
- 5: Needle bearing
- 6: Outer ring
- 7: Needle-like rollers
- 8: Retainer
- 9: Shaft supporting portion
- 10: Divergent pathway
- 11: Lubrication pathway
- 12: Connecting rod bearing
- 13: Oil hole
- 14: Arm boss
- 15: Crank pin
- 20: Needle bearing device
- 21: Needle bearing
- 22: Outer ring
- 23: Needle-like rollers
- 24: Retainer
- 25: Side edge
- 26: Pockets
- 27: Flange portions
- 28: Projection
- 30: Division plane
- 31: Outer-ring-side narrow pathways
- 32: Journal-side narrow pathways
- 34: Small-inner-diameter surface
- 36: Oil hole
- 37: Large-outer-diameter surface
- 38,: 39 Rolling contact surface
- 41: Oil hole
- 42: Projected portion
- 43, 44: Gaps

## Claims

1. A needle bearing comprising: an outer ring (22) being formed into a simple shape of cylinder, with neither of its both ends formed with an inward-oriented flange portion; needle-like rollers (23); and a retainer (24) for guiding the needle-like rollers (23); wherein the retainer (24) has two side edges (25) each faced by the outer ring (22) at a space serving as an outer-ring-side narrow pathway (31) for reduced lubricant leakage whereas each of the retainer side edges (25) is provided with a journal-side narrow-path formation section (28, 34) for formation of a journal-side narrow pathway (32) to reduce lubricant leakage between itself and a journal (2) when the bearing is assembled to the journal (2)
**characterized in that**
the outer-ring-side narrow pathways (31) are between flange portions (27) extended from two outer diameter surfaces in the retainer's side edges to a height to face their corresponding end surfaces of the outer ring (22) and respective end surfaces of the retainer (24).

2. The needle bearing according to Claim 1, wherein the outer-ring-side narrow pathways (31) which are formed between the flange portions (27) and respective end surfaces of the outer ring (22) have a size W1-W2 satisfying 0<W1-W2<0.2 mm, where W1 represents a distance between the two flange portions (27), W2 represent a width of a space between the two end surfaces of the outer ring (22).

3. The needle bearing according to Claims 1 or 2, wherein the retainer (24) is made of synthetic resin.

4. The needle bearing according to one of Claims 1 through 3, wherein the journal-side narrow-path formation sections are formed by projections (28) extended on the inner diameter surfaces of the retainer's two side edges toward the journal (2).

5. The needle bearing according to Claim 4, wherein the journal-side narrow pathways (32) which are formed between the projections' inner diameter surfaces and the journal's outer diameter surface have a size D1-D2 satisfying 0<D1-D2<0.2mm, where D1 represents an inner diameter of the projections (28) in the retainer (24) and D2 represents an outer diameter of the journal (2).

6. The needle bearing according to one of Claims 1 through 3, wherein the journal-side narrow-path formation sections are formed by inner diameter surfaces (34) of the retainer's side edges (25) opposing radially to the journal's outer diameter surface.

7. The needle bearing according to Claim 6, wherein the journal-side narrow pathways (32) have a size D3-D2 satisfying 0<D3-D2<0.2 mm, where D3 represent an inner diameter of the inner diameter surface (34) of the retainer's side edges and D2 represents an outer diameter of the journal (2) to which the bearing (21) is assembled.

8. The needle bearing according to one of Claims 1 through 7, wherein the bearing (21) is separable into two halves, with the outer ring (22) and the retainer (24) dividable on a dividing plane (30) which passes through a centerline of the bearing.

9. A needle bearing device comprising: a shaft (1) including a journal (2) having two ends each formed with an arm (4); and a needle bearing (21) assembled to the journal (2), wherein the needle bearing (21) is provided by one of the needle bearings according to Claims 1 through 8,
the needle bearing (21) having: outer-ring-side narrow pathways (31) formed between two side edges of its retainer (24) and the outer ring (22) for reduced lubricant leakage; and journal-side narrow pathways (32) formed between the retainer's two side edges and the journal (2) for reduced lubricant leakage.

10. The needle bearing device according to Claim 9, wherein the outer ring (22) is formed with an oil hole (36) on an axially outer side of a rolling contact surface (38) in the outer ring (22) but on an axially inner side of the outer-ring-side narrow pathways (31) whereas the journal (2) has a lubrication pathway (11) formed with an oil hole (41) on an axially outer side of the rolling contact surface (39) in the journal (2) but axially inner side of the journal-side narrow-path formation sections.

11. The needle bearing device according to Claim 10, wherein the retainer's side edges (25) are formed with projected portions (42) extended to a more inward position than the outer-ring-side narrow pathways (31) and the journal-side narrow-path formation sections so as to contact end surfaces of the needle-like rollers (23); the projected portions (42), the outer ring (22) and the journal (2) being spaced from each other by radial gaps (43, 44); the oil hole (36) of the outer ring (22) opening to the gap (44) between the projected portion (42) and the outer ring (22), the oil hole (41) on the journal side opening to the gap (43) between the projected portion (42) and the journal (2).

12. The needle bearing device according to one of Claims 9 through 11, placed at a relatively upstream position in a case where there is a plurality of bearing devices disposed along a lubrication pathway.

13. The needle bearing device according to one of Claims 9 through 12, wherein the shaft (1) is provided by one of a crankshaft, a camshaft and a balanceshaft of an engine.

## Patentansprüche

1. Nadellager, das umfasst:
einen Außenring (22), der in einer einfachen Form eines Zylinders ausgebildet ist, wobei keines seiner beiden Enden mit einem nach innen ausgerichteten Flanschabschnitt versehen ist;
nadelartige Rollen (23); sowie
einen Käfig (24) zum Führen der nadelartigen Rollen (23);
wobei der Käfig (24) zwei seitliche Kanten (25) hat, denen jeweils der Außenring (22) in einem Abstand zugewandt ist, der als schmaler Weg (31) der Seite des Außenrings zum verringerten Austreten von Schmiermittel dient, während jede der seitlichen Kanten (25) des Käfigs mit einem Teilabschnitt (28, 34) zur Ausbildung eines schmalen Weges der Seite eines Lagerzapfens versehen ist, mit dem ein schmaler Weg (32) der Seite eines Lagerzapfens ausgebildet wird, um Austreten von Schmiermittel zwischen ihm und einem Lagerzapfen (2) zu verringern, wenn das Lager an dem Lagerzapfen (2) installiert ist,
**dadurch gekennzeichnet, dass**
die schmalen Wege (31) der Seite des Außenrings zwischen Flanschabschnitten (27) liegen, die sich von zwei Außendurchmesser-Flächen an den seitlichen Kanten des Käfigs bis zu einer Höhe erstrecken, in der sie ihren entsprechenden Endflächen des Außenrings (22) und jeweiligen Endflächen des Käfigs (24) zugewandt sind.

2. Nadellager nach Anspruch 1, wobei die schmalen Wege (31) der Seite des Außenrings, die zwischen den Flanschabschnitten (27) und jeweiligen Endflächen des Außenrings (22) ausgebildet sind, eine Größe W1-W2 haben, für die 0<W1-W2<0,2 mm gilt, wobei W1 einen Abstand zwischen den zwei Flanschabschnitten (27) repräsentiert und W2 eine Breite eines Zwischenraums zwischen den zwei Endflächen des Außenrings (22) repräsentiert.

3. Nadellager nach Anspruch 1 oder 2, wobei der Käfig (24) aus Kunststoff besteht.

4. Nadellager nach einem der Ansprüche 1 bis 3, wobei die Teilabschnitte zur Ausbildung eines schmalen Weges der Seite eines Lagerzapfens durch Vorsprünge (28) gebildet werden, die sich an den Innendurchmesser-Flächen der zwei seitlichen Kanten des Käfigs auf den Lagerzapfen (2) zu erstrecken.

5. Nadellager nach Anspruch 4, wobei die schmalen Wege (32) der Seite eines Lagerzapfens, die zwischen den Innendurchmesser-Flächen der Vorsprünge und der Außendurchmesser-Fläche des Lagerzapfens ausgebildet sind, eine Größe D1-D2 haben, für die 0<D1-D2<0,2 mm gilt, wobei D1 einen Innendurchmesser der Vorsprünge (28) in dem Käfig (24) repräsentiert und D2 einen Außendurchmesser des Lagerzapfens (2) repräsentiert.

6. Nadellager nach einem der Ansprüche 1 bis 3, wobei die Teilabschnitte zur Ausbildung eines schmalen Weges der Seite eines Lagerzapfens durch Innendurchmesser-Flächen (34) der seitlichen Kanten (25) des Käfigs gebildet werden, die der Außendurchmesser-Fläche des Lagerzapfens radial gegenüberliegen.

7. Nadellager nach Anspruch 6, wobei die schmalen Wege (32) der Seite eines Lagerzapfens eine Größe D3-D2 haben, für die 0<D3-D2<0,2 mm gilt, wobei D3 einen Innendurchmesser der Innendurchmesser-Fläche (34) der seitlichen Kanten des Käfigs repräsentiert und D2 einen Außendurchmesser des Lagerzapfens (2) repräsentiert, an dem das Lager (21) installiert ist.

8. Nadellager nach einem der Ansprüche 1 bis 7, wobei das Lager (21) in zwei Hälften getrennt werden kann und der Außenring (22) sowie der Käfig (24) an einer Teilungsebene (30) geteilt werden können, die durch eine Mittellinie des Lagers verläuft.

9. Nadellager-Vorrichtung, die umfasst:
eine Welle (1), die einen Lagerzapfen (2) enthält, der zwei Enden hat, die jeweils mit einem Arm (4) versehen sind; und
ein Nadellager (21), das an dem Lagerzapfen (2) installiert ist,
wobei das Nadellager (21) durch eines der Nadellager nach den Ansprüchen 1 bis 8 gebildet wird,
und das Nadellager (21) aufweist:
schmale Wege (31) der Seite des Außenrings, die zwischen zwei seitlichen Kanten seines Käfigs (24) und dem Außenring (22) zum verringerten Austreten von Schmiermittel ausgebildet sind; sowie
schmale Wege (32) der Seite des Lagerzapfens, die zwischen den zwei seitlichen Kanten des Käfigs und dem Lagerzapfen (2) zum verringerten Austreten von Schmiermittel ausgebildet sind.

10. Nadellager-Vorrichtung nach Anspruch 9, wobei der Außenring (22) mit einem Schmierloch (36) an einer axial außen liegenden Seite einer Roll-Kontaktfläche (38) in dem Außenring (22), jedoch an einer axial innenliegenden Seite der schmalen Wege (31) der Seite des Außenrings versehen ist, während der Lagerzapfen (2) einen Schmierungs-Weg (11) aufweist, der mit einem Schmierloch (41) an einer axial außen liegenden Seite der Roll-Kontaktfläche (39) an dem Lagerzapfen (2), jedoch einer axial innenliegenden Seite der Teilabschnitte zur Ausbildung eines schmalen Weges der Seite eines Lagerzapfens versehen ist.

11. Nadellager-Vorrichtung nach Anspruch 10, wobei die seitlichen Kanten (25) des Käfigs mit vorstehenden Abschnitten (42) versehen sind, die sich bis zu einer weiter innen liegenden Position als der der schmalen Wege (31) der Seite des Außenrings und der Teilabschnitte zur Ausbildung eines schmalen Weges der Seite eines Lagerzapfens erstrecken, so dass sie mit Endflächen der nadelartigen Rollen (23) in Kontakt kommen, wobei die vorstehenden Abschnitte (42), der Außenring (22) und der Lagerzapfen (2) durch radiale Zwischenräume (43, 44) voneinander beabstandet sind, sich das Schmierloch (36) des Außenrings (22) zu dem Zwischenraum (44) zwischen dem vorstehenden Abschnitt (42) und dem Außenring (22) öffnet und sich das Schmierloch (41) an der Seite des Lagerzapfens zu dem Zwischenraum (43) zwischen dem vorstehenden Abschnitt (42) und dem Lagerzapfen (2) öffnet.

12. Nadellager-Vorrichtung nach einem der Ansprüche 9 bis 11, die an einer relativ stromauf liegenden Position positioniert ist, wenn eine Vielzahl von Lager-Vorrichtungen an einem Schmierungs-Weg angeordnet ist.

13. Nadellager-Vorrichtung nach einem der Ansprüche 9 bis 12, wobei die Welle (1) durch eine Kurbelwelle, eine Nockenwelle oder eine Ausgleichswelle eines Motors gebildet wird.

## Revendications

1. Roulement à aiguilles, comprenant : une bague extérieure (22) étant conformée en simple cylindre, sans qu'aucune de ses deux extrémités ne présente de partie de bride orientée vers l'intérieur;
des rouleaux en aiguille (23); et une bague de retenue (24) pour guider les rouleaux en aiguille (23);
dans lequel la bague de retenue (24) présente deux bords latéraux (25) face à la bague extérieure (22) face à un espace servant de chemin étroit (31) côté bague extérieure pour réduire les fuites de lubrifiant alors que chacun des bords latéraux (25) de la bague de retenue est pourvu d'une section de formation de chemin étroit (28, 34) côté tourillon pour constituer un chemin étroit (32) côté tourillon afin de réduire les fuites de lubrifiant entre ledit bord et un tourillon (2) lorsque le roulement est monté sur le tourillon (2)
**caractérisé en ce que**
les chemins étroits (31) du côté bague extérieure sont situés entre des parties de bride (27) s'étendant à partir de deux surfaces de diamètre extérieur dans les bords latéraux de la bague de retenue jusqu'à une hauteur en vis-à-vis de leurs surfaces d'extrémité correspondantes de la bague extérieure (22) et des surfaces d'extrémité respectives de la bague de retenue (24).

2. Roulement à aiguilles selon la revendication 1, dans lequel les chemins étroits (31) côté bague extérieure qui sont formés entre les parties de bride (27) et les surfaces d'extrémité respectives de la bague extérieure (22) ont une taille W1-W2 satisfaisant à 0 < W1-W2 <0,2 mm, où W1 représente une distance entre les deux parties de bride (27), W2 représente une largeur d'un espace entre les deux surfaces d'extrémité de la bague extérieure (22).

3. Roulement à aiguilles selon les revendications 1 ou 2, dans lequel la bague de retenue (24) est constituée de résine synthétique.

4. Roulement à aiguilles selon l'une des revendications 1 à 3, dans lequel les sections de formation de chemin étroit côté tourillon sont constituées par des saillies (28) s'étendant sur les surfaces de diamètre intérieur des deux bords latéraux de la bague de retenue vers le tourillon (2).

5. Roulement à aiguilles selon la revendication 4, dans lequel les chemins étroits (32) côté tourillon qui sont constitués entre les surfaces de diamètre intérieur des saillies et la surface de diamètre extérieur du tourillon ont une taille D1-D2 satisfaisant à 0 <D1-D2 <0,2 mm, où D1 représente un diamètre intérieur des saillies (28) dans la bague de retenue (24) et D2 représente un diamètre extérieur du tourillon (2).

6. Roulement à aiguilles selon l'une des revendications 1 à 3, dans lequel les sections de formation de chemin étroit côté tourillon sont constituées par des surfaces de diamètre intérieur (34) des bords latéraux (25) de la bague de retenue opposés radialement à la surface de diamètre extérieur du tourillon.

7. Roulement à aiguilles selon la revendication 6, dans lequel les chemins étroits (32) côté tourillon ont une taille D3-D2 satisfaisant à 0 <D3-D2 <0,2 mm, où D3 représente un diamètre intérieur de la surface de diamètre intérieur (34) des bords latéraux de la bague de retenue et D2 représente un diamètre extérieur du tourillon (2) sur lequel le roulement (21) est monté.

8. Roulement à aiguilles selon l'une des revendications 1 à 7, dans lequel le roulement (21) est séparable en deux moitiés, la bague extérieure (22) et la bague de retenue (24) étant divisibles sur un plan de division (30) qui traverse une ligne médiane du roulement.

9. Dispositif de roulement à aiguilles, comprenant: un arbre (1) incluant un tourillon (2) présentant deux extrémités constituées chacune d'un bras (4); et un roulement à aiguilles (21) monté sur le tourillon (2), dans lequel le roulement à aiguilles (21) est constitué par l'un des roulements à aiguilles selon les revendications 1 à 8,
le roulement à aiguilles (21) présentant: des chemins étroits (31) côté bague extérieure constitués entre deux bords latéraux de sa bague de retenue (24) et la bague extérieure (22) pour réduire les fuites de lubrifiant; et des chemins étroits (32) constitués entre les deux bords latéraux de la bague de retenue et le tourillon (2) pour réduire les fuites de lubrifiant.

10. Dispositif de roulement à aiguilles selon la revendication 9, dans lequel la bague extérieure (22) est constituée avec un trou d'huile (36) sur un côté axialement extérieur d'une surface de contact de roulement (38) dans la bague extérieure (22) mais sur un côté axialement intérieur des chemins étroits (31) côté bague extérieure tandis que le tourillon (2) présente un chemin de lubrification (11) constitué d'un trou d'huile (41) sur un côté axialement extérieur de la surface de contact de roulement (39) dans le tourillon (2) mais sur un côté axialement intérieur des sections de formation de chemin étroit côté tourillon.

11. Dispositif de roulement à aiguilles selon la revendication 10, dans lequel les bords latéraux (25) de la bague de retenue sont constitués de parties en saillie (42) s'étendant vers une position plus rentrée vers l'intérieur que les chemins étroits (31) côté bague extérieure et les sections de formation de chemin étroit côté tourillon de manière à entrer en contact avec des surfaces d'extrémité des rouleaux en aiguille (23); les parties en saillie (42), la bague extérieure (22) et le tourillon (2) étant espacés les uns des autres par des espaces radiaux (43, 44); le trou d'huile (36) de la bague extérieure (22) s'ouvrant vers l'espace (44) situé entre la partie en saillie (42) et la bague extérieure (22), le trou d'huile (41) sur le côté du tourillon s'ouvrant vers l'espace (43) situé entre la partie en saillie (42) et le tourillon (2).

12. Dispositif de roulement à aiguilles selon l'une des revendications 9 à 11, placé dans une position relativement en amont au cas où il existe une pluralité de dispositifs de roulement disposés le long d'un chemin de lubrification.

13. Dispositif de roulement à aiguilles selon l'une quelconque des revendications 9 à 12, dans lequel l'arbre (1) est constitué par l'un des éléments que sont un vilebrequin, un arbre à cames et d'un arbre d'équilibrage de moteur.
